# EUROPEAN PATENT APPLICATION

(11) **EP 3 681 010 A1**
(43) Date of publication of application: **15.07.2020**
(21) Application number: 19166571.0
(22) Date of filing: 01.04.2019
(51) Int. Cl.: H02J 13/00, H02J 3/28, H02J 3/38, H02J 7/02, H02J 3/00

(54) **SMART GRID INTEGRATION SYSTEM AND METHOD OF PROCESSING POWER INFORMATION THEREOF**

(30) Priority: 08.01.2019 CN 201910017266
(71) Applicant: Delta Electronics, Inc., Taoyuan County 32063 (TW)
(72) Inventor: LEE, Lei-Ming, 32063 Taoyuan City (TW); YANG, I-Jung, 32063 Taoyuan City (TW); LIN, Xin-Hung, 32063 Taoyuan City (TW)
(74) Representative: 2K Patentanwälte Blasberg Kewitz & Reichel

(57) **Abstract**

A smart grid integration system includes an AC grid (20) and at least one power conversion apparatus (10). The power conversion apparatus (10) includes a control unit (12) and a communication unit (13). The control unit (12) is coupled to the communication unit (13) and receives a voltage signal (Sv) corresponding to a voltage of the AC grid (20). The control unit (12) decomposes the voltage signal (Sv) into a plurality of frequency components and sets a fundamental component and a plurality of dominant harmonic components as a voltage operation signal. The communication unit (13) receives a current signal corresponding to a current flowing through a circuit node through a current port (103) and generates a current information signal. The communication unit (13) receives the voltage operation signal transmitted from the control unit (12) and calculates power information by multiplying the voltage operation signal and the current information signal.

## Description

### BACKGROUND

### Technical Field

The present disclosure relates to a grid system and a method of processing power information, and more particularly to a smart grid integration system and a method of processing power information.

### Description of Related Art

The statements in this section merely provide background information related to the present disclosure and do not necessarily constitute prior art.

In the prior art smart grid infrastructure, specific devices instead of traditional human statistics are usually installed in home, commercial, and/or industrial users for transmitting meter data by the power company.

However, there are still important issues for improvement in the smart grid, for example, how to ensure power supply stability and increase distribution safety and efficiency. With the development of renewable energy, distributed power supplies and microgrids will be bound to be the future development trend, in particular, the demand and application of power information is an important part of the power conditioning. In the prior art smart grid, at least three independent parts including a monitoring system, a power conversion apparatus, and a measuring apparatus are operated for the demand and application of power information, such as voltage, current, and power so that the smart grid coordinately operates to each other. For the construction of the smart grid, it is difficult to reduce costs of installing devices and manpower and time costs of maintaining devices as well as cause transmission losses due to the increased electromagnetic interference with dense wiring configuration. Moreover, the real-time and accurate power information is also the key to operate with maximum efficiency of the smart grid.

### SUMMARY

An objective of the present disclosure is to provide a smart grid integration system to acquire real-time and accurate power information.

In order to achieve the objective, the smart grid integration system of the present disclosure includes an AC grid and at least one power conversion apparatus electrically connected to the AC grid. Each power conversion apparatus includes an AC output port, a control unit, and a communication unit. The AC output port is electrically connected to the AC grid. The control unit receives a voltage signal corresponding to a voltage of the AC grid. The control unit decomposes the voltage signal into a plurality of frequency components and sets a fundamental component and a plurality of dominant harmonic components as a voltage operation signal. The communication unit is coupled to the control unit and receives a current signal corresponding to a current flowing through a circuit node through a current port to generate a current information signal. The communication unit receives the voltage operation signal transmitted from the control unit and calculates power information by multiplying the voltage operation signal and the current information signal.

Accordingly, the smart grid integration system is provided to increase the efficiency of the smart grid by the acquired real-time and accurate power information.

Another objective of the present disclosure is to provide a method of processing power information of a smart grid integration system to acquire real-time and accurate power information.

In order to achieve the objective, the method of processing power information of the smart grid integration system includes the steps of: (a) receiving, by a communication unit, a current signal of an AC grid to generate a current information signal, (b) receiving, by a control unit, a voltage signal of the AC grid, (c) decomposing, by the control unit, the voltage signal into a plurality of frequency components, setting a fundamental component and a plurality of dominant harmonic components as a voltage operation signal, and transmitting the voltage operation signal to the communication unit, and (d) calculating, by the communication unit, power information by multiplying the voltage operation signal and the current information signal.

Accordingly, the method of processing power information of the smart grid integration system is provided to increase the efficiency of the smart grid by the acquired real-time and accurate power information.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWING

The present disclosure can be more fully understood by reading the following detailed description of the embodiment, with reference made to the accompanying drawings as follows:
FIG. 1 is a block diagram of a smart grid integration system according to a first embodiment of the present disclosure.
FIG. 2 is a block diagram of the smart grid integration system according to a second embodiment of the present disclosure.
FIG. 3 is a block diagram of a power conversion apparatus of the smart grid integration system according to a first embodiment of the present disclosure.
FIG. 4 is a block diagram of the power conversion apparatus of the smart grid integration system according to a second embodiment of the present disclosure.
FIG. 5 is a flowchart of a method of processing power information according to the present disclosure.
FIG. 6 is a schematic view of processing power information according to the present disclosure.

### DETAILED DESCRIPTION

Reference will now be made to the drawing figures to describe the present disclosure in detail. It will be understood that the drawing figures and exemplified embodiments of present disclosure are not limited to the details thereof.

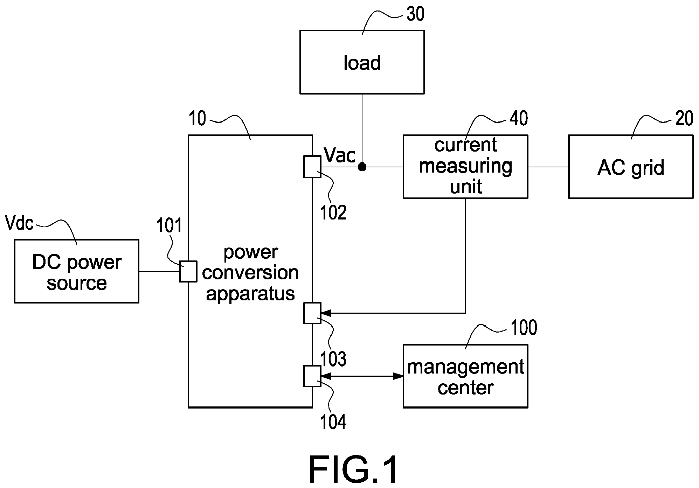

Please refer to FIG. 1, which shows a block diagram of a smart grid integration system according to a first embodiment of the present disclosure. The smart grid integration system includes an AC grid 20 and at least one power conversion apparatus 10 electrically connected to the AC grid 20, and the smart gird integration system supplies power to a load 30 or the AC grid 20. The load 30 may be a household load or other general loads. Further, the load 30 is not limited to a power-consuming load, for example, the load 30 may be electric vehicle supply equipment (EVSE). At this condition, the battery of the electric vehicle can reversely provide power to the AC grid 20. The power conversion apparatus 10 includes a plurality of ports, such as a DC input port 101, an AC output port 102, a current port 103, and a communication port 104. In particular, the number of the DC input port 101 may be plural for connecting to a plurality of DC power sources Vdc according to actual needs.

The power conversion apparatus 10 receives the DC power source Vdc through the DC input port 101 and converts the DC power source Vdc into an AC power source Vac. The AC power source Vac is provided to supply power to the load 30 and/or fed into the AC grid 20. In one embodiment, the DC power source Vdc may be a renewable energy power source or a combination of a renewable energy power source and a rechargeable battery. Specifically, the renewable energy power source may be, for example but not limited to, a power source converted form solar energy, wind energy, hydraulic energy, geothermal energy, or tidal energy. The rechargeable battery may be, for example but not limited to, a lithium battery or a Ni-MH battery.

Take the combination of the renewable energy power source and the rechargeable battery for example. The renewable energy power source supplies power to the power conversion apparatus 10 and further provides extra power to charge the rechargeable battery. Therefore, the rechargeable battery can provide backup power to meet the power requirement if the renewable energy power source fails to normally or completely supply power. At this condition, the rechargeable battery provides the backup power to the power conversion apparatus 10 through the DC input port 101.

The smart grid integration system further includes a current measuring unit 40. The current measuring unit 40 is coupled between the AC grid 20 and the current port 103 of the power conversion apparatus 10. In one embodiment, the current measuring unit 40 may be a current transformer (CT) or a Hall-effect sensor for measuring a total current flowing through the AC grid 20 and converting the large-scale total current into a small-scale current signal suitable for being received through the current port 103 and processed by the power conversion apparatus 10. In one embodiment, the current signal is not limited to a current form, that is, the current signal may alternatively be a voltage form to represent the current information based on different measuring devices. In addition, the current measuring unit 40 may not be limited to a position for measuring the total current flowing through the AC grid 20, that is, the current measuring unit 40 may be installed at different circuit nodes for measuring currents flowing different current paths. Accordingly, the required power information can be applied to different requirements due to different measured currents based on different positions where the current measuring unit 40 is installed.

Further, the smart grid integration system further communicates with a management center 100. The management center 100 may be, for example but not limited to, a private or government-owned power company or power enterprise. The smart grid integration system transmits the power information (further including the current information and/or the voltage information) to the management center 100 in a wireless or a wired manner through the communication port 104 of the power conversion apparatus 10. Accordingly, the management center 100 masters, integrates, and manages the power information of the smart grid according to the received power information, and the detailed description will be made as follows.

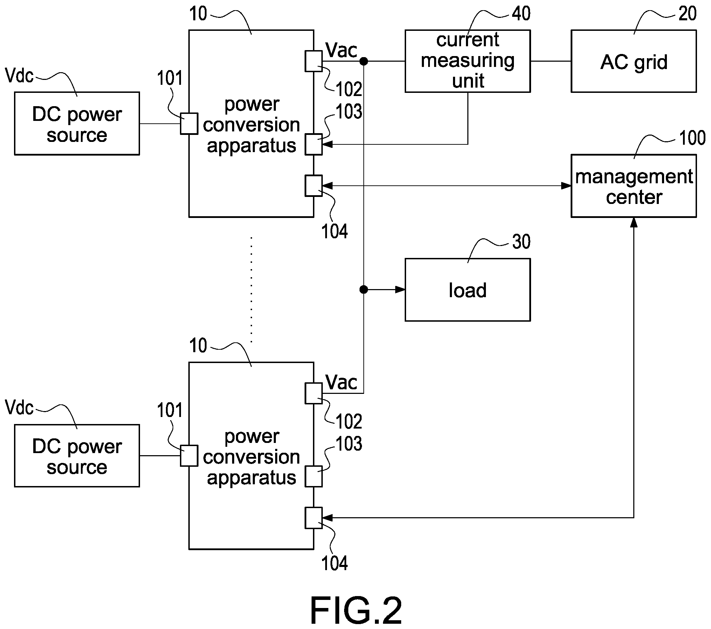

Please refer to FIG. 2, which shows a block diagram of the smart grid integration system according to a second embodiment of the present disclosure. The major difference between the second embodiment shown in FIG. 2 and the first embodiment shown in FIG. 1 is that the smart grid integration system of the former includes a plurality of power conversion apparatuses 10. If the smart grid integration system has a large power requirement, for example the renewable energy power source can provide large power, more than two power conversion apparatuses 10 may be coupled in parallel to supply power to the load 30 and/or to be fed into the AC grid 20. Although the number of the power conversion apparatus 10 is plural, the current measuring unit 40 may be installed at the input side of the AC grid 20 and the acquired current signal can be only transmitted to one of the power conversion apparatuses 10. The power information processed by one of the power conversion apparatuses 10 is transmitted to the management center 100 through the communication port 104 so that the management center 100 can realize the power states in this power supply area. In addition, the functions and configurations of other units in FIG. 2 are substantially identical with those in FIG. 1, the detail description is omitted here for conciseness.

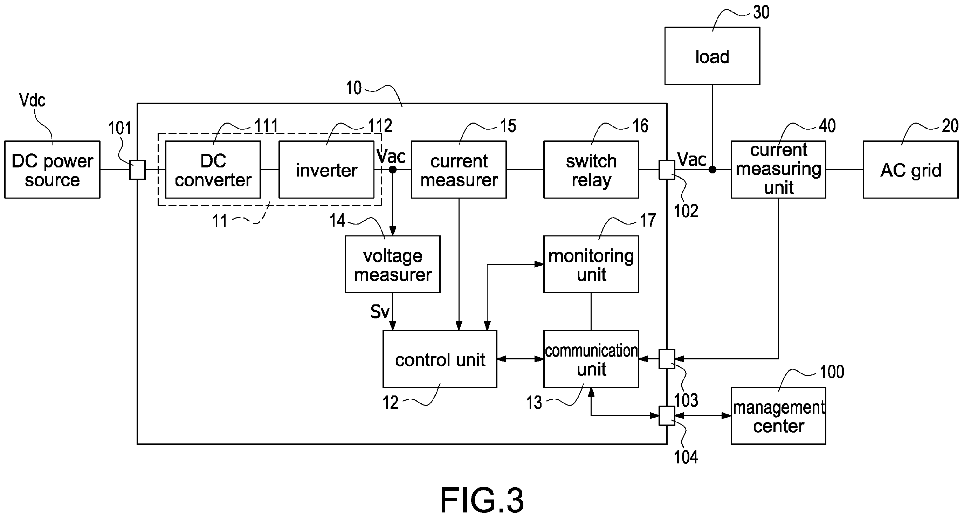

Please refer to FIG. 3, which shows a block diagram of a power conversion apparatus of the smart grid integration system according to a first embodiment of the present disclosure. The power conversion apparatus 10 includes a power conversion unit 11, a control unit 12, a communication unit 13, a voltage measurer 14, a current measurer 15, a switch relay 16, and a monitoring unit 17. In one embodiment, the power conversion unit 11 includes a DC converter 111 and an inverter 112 coupled in series to the DC converter 111. The DC converter 111 may be a DC-to-DC converter. The DC converter 111 receives the DC power source Vdc through the DC input port 101 and converts (steps up or steps down) a voltage of the DC power source Vdc. The inverter 112 receives the converted DC power source Vdc and changes the converted DC power source Vdc into the AC power source Vac. In some applications, the DC converter 111 can be absent so that the inverter 112 directly receives the DC power source Vdc and changes the DC power source Vdc into the AC power source Vac.

The control unit 12 provides main control functions of the power conversion apparatus 10. For example, a phase-locked control or a voltage/current control of the power conversion unit 11 may be implemented by a high-performance microcontroller or digital signal processor cooperated with peripheral circuits.

The current measurer 15 is coupled between the power conversion unit 11 and the switch relay 16, and further coupled to the control unit 12 for measuring an output current of the power conversion apparatus 10. Moreover, the current information of the measured output current is transmitted to the control unit 12. The switch relay 16 may be coupled in series between the current measurer 15 and the AC output port 102. When the power conversion apparatus 10 can normally output the converted AC power source Vac, the switch relay 16 is controlled for example by the control unit 12 to be turned on so that the AC power source Vac is coupled to the AC grid 20. Since the current measurer 15 and the switch relay 16 is connected on the same current path, the relative position between the current measurer 15 and the switch relay 16 may be exchanged.

The voltage measurer 14 is coupled to the power conversion unit 11 and the control unit 12 for measuring a voltage of the AC power source Vac. Moreover, the voltage information of the measured voltage is transmitted to the control unit 12. Since the AC power source Vac is coupled to the AC grid 20, the AC power source Vac, which is outputted from the inverter 112, directly measured by the voltage measurer 14 can be regarded as an AC voltage of the AC grid 20. The voltage measurer 14 outputs a voltage signal Sv corresponding to the AC power source Vac measured by the voltage measurer 14 to the control unit 12 so that the voltage signal Sv received by the control unit 12 corresponds to the voltage information of the AC grid 20. Incidentally, the current measuring unit 40 is installed outside the power conversion apparatus 10 and coupled to the power conversion apparatus 10 through the current port 103. As shown in FIG. 3, the current measurer 15 can only measure an output current of the power conversion apparatus 10. If the load 30 such as a household load is present, the current measuring unit 40 may be installed close to the AC grid 20 to acquire resultant current according to the output current of the power conversion apparatus 10 and a load current flowing through the load 30.

The communication unit 13 is coupled to the control unit 12, the monitoring unit 17, the current port 103, and the communication port 104. The total current flowing through the AC grid 20 measured by the current measuring unit 40 is inputted to the communication unit 13 through the current port 103. The communication unit 13 includes an analog-to-digital converter for receiving a small analog signal corresponding to the current and converting the small analog signal into the digital current information signal. In one embodiment, since the communication unit 13 is mainly responsible for communication without required complicated operation and control, the communication unit 13 may be implemented by a low-performance microcontroller (lower than the control unit 12) cooperated with peripheral circuits. Moreover, the communication unit 13 further transmits the power information of the AC grid 20 to the management center 100 in the wireless or the wired manner through the communication port 104, and the detailed description will be made as follows.

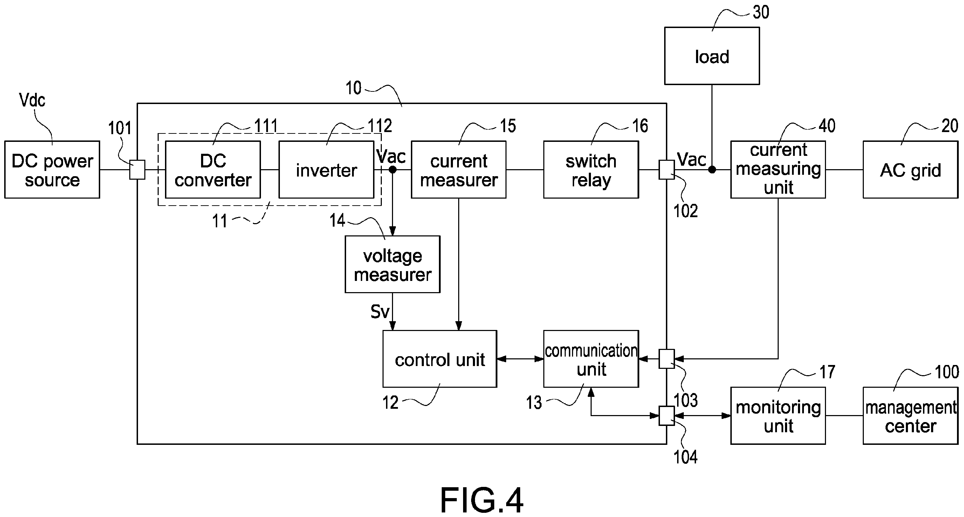

Please refer to FIG. 4, which shows a block diagram of the power conversion apparatus of the smart grid integration system according to a second embodiment of the present disclosure. The major difference between the second embodiment shown in FIG. 4 and the first embodiment shown in FIG. 3 is that the monitoring unit 17 is not integrated inside the power conversion apparatus 10 but the monitoring unit 17 is communicatively linked between the communication port 104 and the management center 100. The power information calculated by the communication unit 13 is first transmitted to the monitoring unit 17 to be temporarily stored or processed, and then transmitted to the management center 100 in the wireless or the wired manner.

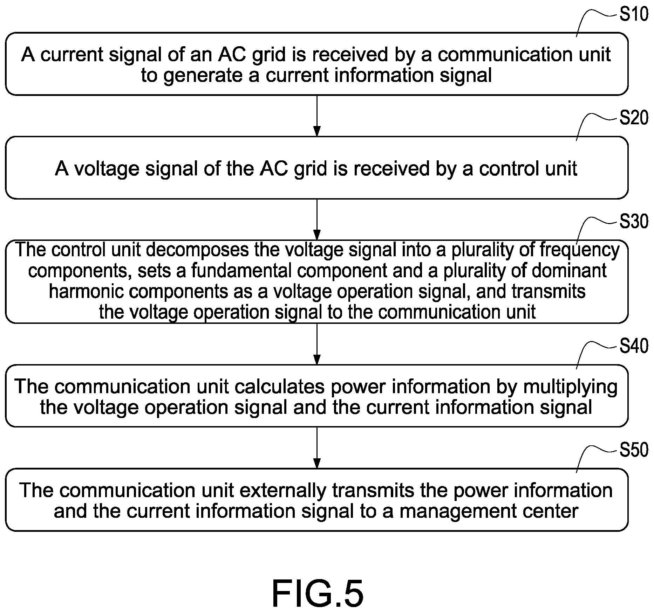

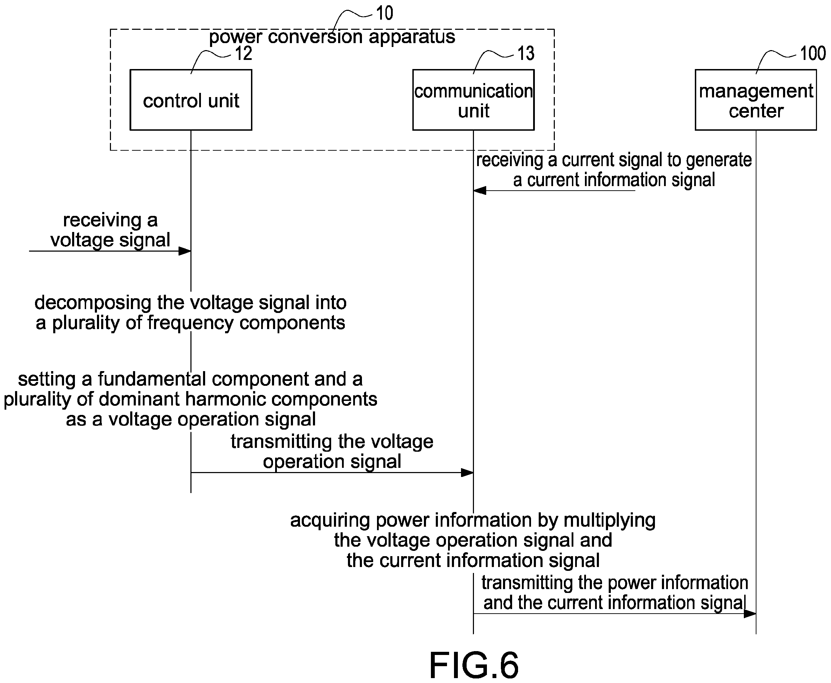

Hereinafter, the specific embodiment of calculating, processing, and integrating the power information of the smart grid integration system will be described in detail. Please refer to FIG. 5 and FIG. 6, which show a flowchart of a method and a schematic view of processing power information according to the present disclosure, respectively. The steps of processing the power information of the smart grid integration system include as follows. A current signal of an AC grid 20 is received by a communication unit 13 to generate a current information signal (S10). A voltage signal of the AC grid 20 is received by a control unit 12 (S20). The control unit 12 and the communication unit 13 are installed inside a power conversion apparatus 10, and the control unit 12 is communicatively coupled to the communication unit 13. Incidentally, the sequence of the step (S10) and the step (S20) is not limited to that the step (S10) is earlier than the step (S20). In other words, the step (S20) can be earlier than or simultaneously with the step (S10), as long as time points of sampling the voltage signal and the current signal can be retained.

Afterward, the control unit 12 decomposes the voltage signal into a plurality of frequency components, sets a fundamental component and a plurality of dominant harmonic components as a voltage operation signal, and transmits the voltage operation signal to the communication unit 13 (S30). In the step (S30), the control unit 12 transforms the voltage signal from time domain to frequency domain by a Fourier Transform or a Fast Fourier Transformer, thereby decomposing the voltage signal into the plurality of frequency components. For example, the voltage signal is decomposed by the Fourier transform into the fundamental component and a plurality of (for example forty or fifty) harmonic components. Therefore, the plurality of frequency components of the voltage signal is decomposed by the Fourier transform.

Further, the control unit 12 sets the fundamental component and the plurality of dominant harmonic components, such as from the second harmonic component to the fifth harmonic component or from the second harmonic component to the seventh harmonic component as the voltage operation signal. The so-called "dominant" harmonic components represent that the harmonic components are relatively important components of composing the voltage signal. The dominant harmonic components are usually the lower frequency components of the harmonic components, such as from the second harmonic component to the fifth harmonic component or from the second harmonic component to the seventh harmonic component exemplified above. Take the dominant harmonic components from the second harmonic component to the seventh harmonic component for example, harmonic components over the eighth harmonic component are not considered when the voltage operation signal is set by the control unit 12. For this reason, the calculated voltage operation signal is almost the same as the real voltage signal, that is, a difference between the calculated voltage operation signal and the real voltage signal is very small. Accordingly, the real voltage signal can be represented by the voltage operation signal to a certain extent.

The control unit 12 transmits the voltage operation signal to the communication unit 13 so that the communication unit 13 calculates power information by multiplying the voltage operation signal and the current information signal (S40). In particular, the current information signal is a signal for representing the current flowing through the AC grid 20 and the voltage operation signal is a signal for representing the voltage of the AC grid 20, and therefore the power information such as power flow and power direction between the AC grid 20 and the power conversion apparatus 10 can be acquired by multiplying the voltage operation signal and the current information signal.

In particular, if the current measured by the current measuring unit 40 through the current port 103 is directly processed by the control unit 12, double safety distance (SELV requirement) is required in order to meet electrical regulations if an external electric touch occurs from a user. However, the double safety distance causes the available space of the circuit board to be limited to increase the difficulty of the circuit layout. In the present disclosure, the external signal is only directly provided to the communication unit 13 rather than the control unit 12. Moreover, the current signal of the AC grid 20 is processed by the communication unit 13 and the voltage signal of the AC grid 20 is processed by the control unit 12. Since the current signal and the voltage signal are processed in different units, the calculated real-time power information would be error due to a transmission delay of transmitting the voltage signal from the control unit 12 to the communication unit 13. To be able to minimize (weaken) the effect of the transmission delay, the data amount of the voltage signal transmitted from the control unit 12 to the communication unit 13 would be significantly reduced. In other words, the reduced data amount of the voltage signal would shorten the time of transmitting the voltage signal to the communication unit 13 to minimize the effect of the transmission delay so that the calculated real-time power information is closer to the actual power information. Therefore, the fundamental component and the plurality of dominant harmonic components set as the voltage operation signal, and the voltage operation signal is transmitted to the communication unit 13 for calculating the power information, thereby significantly reducing the data amount of the voltage signal.

Finally, the power information calculated by the communication unit 13 is communicated with the management center 100 in the wireless or the wired manner through the communication port 104 so that the power information and the current information signal are transmitted to the management center 100 (S50). Accordingly, the management center 100 masters, integrates, and manages the power information of the smart grid according to the received power information and current information signal.

In conclusion, the present disclosure has following features and advantages:
1. The power conversion apparatus of the present disclosure provides a plurality of ports and circuits of monitoring power, converting power, and measuring power so as to save manpower and time, simplify peripheral circuits, reduce electromagnetic interface, and reduce hardware costs based on an integration of the ports and circuits in a single module.
2. The control unit is used to reduce the data amount of the voltage signal so as to shorten the time of transmitting the voltage signal to the communication unit and reduce the effect the transmission delay so as to calculate more real-time power information by the communication unit.

## Claims

1. A smart grid integration system, **characterized in that** the smart grid integration system comprising:
an AC grid (20), and
at least one power conversion apparatus (10), each power conversion apparatus (10) comprising:
an AC output port (102) electrically connected to the AC grid (20),
a control unit (12) configured to receive a voltage signal (Sv) corresponding to a voltage of the AC grid (20), wherein the control unit (12) is configured to decompose the voltage signal (Sv) into a plurality of frequency components and set a fundamental component and a plurality of dominant harmonic components as a voltage operation signal, and
a communication unit (13) coupled to the control unit (12) and configured to receive a current signal corresponding to a current flowing through a circuit node through a current port (103) to generate a current information signal, wherein the communication unit (13) is configured to receive the voltage operation signal transmitted from the control unit (12) and calculate power information by multiplying the voltage operation signal and the current information signal.

2. The smart grid integration system in claim 1, wherein the communication unit (13) is configured to transmit the power information to a management center (100) outside the power conversion apparatus (10) through a communication port (104).

3. The smart grid integration system in claim 1 or claim 2, wherein the power conversion apparatus (10) further comprises:
a monitoring unit (17) coupled to the control unit (12) and the communication unit (13).

4. The smart grid integration system in claim 3, wherein a communication link is formed between the monitoring unit (17) and the management center (100) through the communication port (104).

5. The smart grid integration system in claim 2, wherein a communication link is formed between the communication unit (13) and a monitoring unit (17) outside the power conversion apparatus (10) through the communication port (104).

6. The smart grid integration system in claim 5, wherein a communication link is formed between the monitoring unit (17) and the management center (100).

7. The smart grid integration system in any one of claims 1-6, further comprising:
a current measuring unit (40) configured to measure a current of the AC grid (20).

8. The smart grid integration system in claim 7, wherein the current measuring unit (40) is a current transformer or a Hall-effect sensor.

9. The smart grid integration system in any one of claims 1-8, wherein the power conversion apparatus (10) further comprises:
a power conversion unit (11) configured to receive a DC power source (Vdc) through a DC input port (101) and convert the DC power source (Vdc) into an AC power source (Vac), and
a voltage measurer (14) coupled to the control unit (12) and configured to measure a voltage of the AC power source (Vac) as the voltage signal (Sv),
wherein the AC power source (Vac) is transmitted to the AC grid (20) through the AC output port (102).

10. The smart grid integration system in any one of claims 1-9, wherein the communication unit (13) comprises:
an analog-to-digital converter configured to receive the current signal and convert the current signal into the current information signal.

11. The smart grid integration system in any one of claims 1-10, wherein when the number of the at least one power conversion apparatus (10) is plural, the power conversion apparatuses (10) are coupled in parallel to supply power to a load (30) coupled to the power conversion apparatuses (10) and the AC grid (20).

12. A method of processing power information of a smart grid integration system, **characterized in that** the method comprising the steps of:
(a) receiving, by a communication unit (13), a current signal of an AC grid (20) to generate a current information signal,
(b) receiving, by a control unit (12), a voltage signal (Sv) of the AC grid (20),
(c) decomposing, by the control unit (12), the voltage signal (Sv) into a plurality of frequency components, setting a fundamental component and a plurality of dominant harmonic components as a voltage operation signal, and transmitting the voltage operation signal to the communication unit (13), and
(d) calculating, by the communication unit (13), power information by multiplying the voltage operation signal and the current information signal.

13. The method of processing power information of the smart grid integration system in claim 12, after the step (d) further comprising the step of:
(e) transmitting, by the communication unit (13), the power information to a management center (100).

14. The method of processing power information of the smart grid integration system in claim 13, in the step (e) further comprising the step of:
transmitting, by the communication unit (13), the current information signal to the management center (100).

15. The method of processing power information of the smart grid integration system in any one of claims 12-14, in the step (c) comprising the step of:
transforming, by the control unit (12), the voltage signal (Sv) from time domain to frequency domain by a Fourier transform or a Fast Fourier Transformer to decompose the voltage signal (Sv) into the plurality of frequency components.
